# EUROPÄISCHE PATENTSCHRIFT

(11) **EP 2 601 073 B1**
(45) Veröffentlichungstag und Bekanntmachung des Hinweises auf die Patenterteilung: **02.06.2021**
(21) Anmeldenummer: 11739086.4
(22) Anmeldetag: 04.08.2011
(51) Int. Cl.: B60N 2/30

(54) **BEFESTIGUNGSVORRICHTUNG FÜR EINEN FAHRZEUGSITZ UND FAHRZEUGSITZ**
FIXING DEVICE FOR A VEHICLE SEAT AND VEHICLE SEAT
DISPOSITIF DE FIXATION POUR SIÈGE DE VÉHICULE ET SIÈGE DE VÉHICULE

(30) Priorität: 04.08.2010 DE 102010033267
(43) Veröffentlichungstag der Anmeldung: 12.06.2013
(73) Patentinhaber: Adient Luxembourg Holding S.à r.l., 1855 Luxembourg (LU)
(72) Erfinder: FLUCHT, Stefan, 42655 Solingen (DE); GEORGE, Ian, Shropshire TF6 6PR (GB)
(74) Vertreter: Finger, Catrin
(86) Internationale Anmeldenummer: PCT/EP2011/063475
(87) Internationale Veröffentlichungsnummer: WO 2012/017049

(56) Entgegenhaltungen:
- EP-A1- 1 602 525
- US-B1- 6 293 603

## Beschreibung

Die Erfindung betrifft einen Fahrzeugsitz gemäß den Merkmalen des Oberbegriffs des Patentanspruchs 1.

Aus dem Stand der Technik ist es allgemein bekannt, dass in einem Fahrzeug angeordnete Fahrzeugsitze zur Schaffung eines vergrößerten Stauraums in dem Fahrzeug verschiebbar und/oder um eine oder mehrere karosseriefeste Achsen klappbar sind, so dass der zusammengeklappte Fahrzeugsitz in einem Fußraum des Fahrzeugs verstaut werden kann. Hierzu sind Befestigungsvorrichtungen vorgesehen, mittels welcher der Fahrzeugsitz im Fahrzeug befestigt und klappbar ist.

Solche Fahrzeugsitze sind beispielsweise aus der DE 103 55 819 A1, DE 10 2008 023 526 A1 oder der US 7,255,384 B2 oder der US 6,293,603 B1 bekannt.

Aufgabe der vorliegenden Erfindung ist es, eine gegenüber dem Stand der Technik verbesserten Fahrzeugsitz anzugeben, bei welchem ein Verstauen in einen Fußraum des Fahrzeugs erleichtert und ein sicheres Verstauen ermöglicht ist.

Die Aufgabe wird erfindungsgemäß durch einen Fahrzeugsitz mit den Merkmalen des Patentanspruchs 1 gelöst.

Der Fahrzeugsitz umfasst ein als Viergelenk-Getriebe ausgebildetes Mehrgelenk-Getriebe und eine Verriegelungsvorrichtung, die bei einem Schwenken oder Klappen des Fahrzeugsitzes über einen definierten Grenzwinkel hinaus das Mehrgelenk-Getriebe entriegelt, durch das der Fahrzeugsitz zwischen einer entriegelten ersten Position, insbesondere einer höheren Nichtgebrauchs- oder Gebrauchsstellung, und einer entriegelten zweiten Position, insbesondere einer Ruhestellung oder flachen und somit niedrigeren Bodenstellung in einer verstauten Position, oder umgekehrt kontrolliert führbar, insbesondere schwenk- und längsverschiebbar ist.

Darüber hinaus ist das Viergelenk-Getriebe zum Verstauen des Fahrzeugsitzes in einen Fußraum des Fahrzeugs mittels der Verriegelungsvorrichtung durch einen Nutzer einfach und bequem ver- und entriegelbar, wobei keine gesonderte und aufwändige manuelle Betätigung eines oder mehrerer entfernt voneinander befindlicher Verriegelungselemente durch einen Nutzer des Fahrzeugs erforderlich ist. Die zum Verstauen des Fahrzeugsitzes erforderliche vertikale und horizontale Bewegung, insbesondere kombinierte Schwenkbewegung und Längsverschiebung des Fahrzeugsitzes, wird mittels des Viergelenk-Getriebes kontrolliert geführt, wobei eine Schwenkbewegung des Fahrzeugsitzes und des Viergelenk-Getriebes eine Verschiebung des Fahrzeugsitzes nach vorne vorgibt. Somit ist ein Verstauen des Fahrzeugsitzes in dem Fußraum für den Nutzer vereinfacht und bewirkt eine Komforterhöhung sowie eine Vergrößerung einer Ladefläche oder eines Frachtraumes. Auch werden menschliche Fehler beim Verschließen und Öffnen der Verriegelungselemente vermieden.

Eine mögliche Ausführungsform der Erfindung sieht vor, dass die Verriegelungsvorrichtung mindestens eine Pin-Slot-Führung zur geführten Ent- oder Verriegelung des Viergelenk-Getriebes und eine Arretierungsvorrichtung zur Verriegelung des Fahrzeugsitzes aufweist. Dies ermöglicht eine einfache sowie sichere Ent- und Verriegelung des Fahrzeugsitzes. Darüber hinaus ermöglicht die beispielsweise als Kulissen-Zapfen oder als Pin-Slot ausgebildete Ent- und Verriegelungsführung des Viergelenk-Getriebes dass die für die Ent- oder Verriegelung erforderlichen Ent- bzw. Verriegelungskräfte aufgebracht werden.

In einer weiteren Ausführungsform ist der Fahrzeugsitz bei Ent- oder Verriegelung zwischen einer verriegelten ersten oder zweiten Position und einer entriegelten ersten oder zweiten Position durch die Pin-Slot-Führung oder umgekehrt kontrolliert führbar, insbesondere schwenkbar. Somit ist der Fahrzeugsitz sowohl bei der Ent- als auch bei der Verriegelungsbewegung aus oder in eine der verriegelten Endpositionen, insbesondere aus oder in eine verriegelten Endposition in verstauter Stellung und aus oder in eine verriegelten Endposition in erhöhter Stellung des Fahrzeugsitzes, kontrolliert führbar.

In einer einfachen Ausführungsform umfasst die Pin-Slot-Führung ein als Pin ausgebildetes Verriegelungselement und eine als Slot ausgebildete Aussparung, wobei der Pin am Sitzflächenteil und der Slot am vierten Befestigungselement oder umgekehrt angeordnet sein kann. Dies stellt eine einfache Führung des Fahrzeugsitzes beim Ver- und Entriegeln dar. Darüber hinaus umfasst die Verriegelungsvorrichtung eine Arretierungsvorrichtung, die zumindest eine als Schlitz ausgebildete Ausnehmung und zumindest ein als Bolzen ausgebildetes Arretierungselement aufweist. Dies ermöglicht eine einfache und lösbare Sperre oder Verriegelung des Fahrzeugsitzes in einer der verriegelten Endposition, d.h. in der verriegelten verstauten Position oder der verriegelten erhöhten Position.

Zur einfachen Führung des Fahrzeugsitzes in die verstaute Endposition oder zurück in die erhöhte Position ist das Viergelenk-Getriebe vorgesehen, dessen erstes Befestigungselement boden- oder karosserieseitig und dessen viertes Befestigungselement sitzseitig an einem als Betätigungselement ausgebildeten Sitzflächenteil befestigt ist. Dabei sind die als Schwingen ausgebildeten zweiten und dritten Befestigungselemente, die an einem Ende schwenkbar gelagert am als Abstand oder Boden dienenden ersten Befestigungselement und am anderen Ende schwenkbar gelagert am als Koppel bzw. Antrieb ausgebildeten vierten Befestigungselement angeordnet sind, miteinander gekoppelt. Mit anderen Worten: Mittels der vier Befestigungselemente mit vier Drehgelenkpunkten ist ein einfaches Viergelenk-Getriebe, insbesondere ein Koppel- oder Parallelogramm-Getriebe ermöglicht.

In einer möglichen Ausführungsform ist die Pin-Slot-Führung der Verriegelungsanordnung zur Führung des Fahrzeugsitzes bei der Ver- oder Entriegelung mittig am als Koppel oder Antrieb ausgebildeten vierten Befestigungselement angeordnet. Dies ermöglicht bei einer über die Entriegelung hinausgehende Bewegung eine einfache und sichere Führung des Mehrgelenk-Getriebes mittels des als Koppel oder Antrieb, insbesondere Treibstange ausgebildeten vierten Befestigungselementes. Darüber hinaus weist das erste Befestigungselement in Längsrichtung gesehen ein hinteres abgewinkeltes Ende auf, an welchem das Arretierungselement angeordnet, z.B. form- und/oder kraftschlüssig, befestigt oder angeformt ist. Dabei ist das Arretierungselement als ein Bolzen oder Stift ausgebildet. Alternativ können das Arretierungselement und das erste Befestigungselement einstückig, z. B. als ein Formteil, ausgeführt sein.

Der Fahrzeugsitz, insbesondere ein Kraftfahrzeugsitz, umfasst ein zumindest teilweise klappbares Sitzflächenteil und ein an dem Sitzflächenteil klappbares Lehnenteil sowie ein als Viergelenk-Getriebe ausgebildetes Mehrgelenk-Getriebe. Dabei kann das Viergelenk-Getriebe in Längsrichtung gesehen mittels des vierten Befestigungselementes am vorderen Ende des Fahrzeugsitzes an dessen Sitzflächenteil und mittels des ersten Befestigungselementes karosserie- oder bodenseitig angeordnet sein, wobei zwischen diesen die als Schwingen ausgebildeten zweiten und dritten Befestigungselemente angeordnet sind.

Dabei ist das Viergelenk-Getriebe derart ausgebildet, dass der Fahrzeugsitz zu einer Achse des Fahrzeugs klappbar ist, wobei der Fahrzeugsitz eine Verriegelungsvorrichtung umfasst, die bei einem Klappen des Fahrzeugsitzes über einen definierten Grenzwinkel hinaus entriegelt wird, wobei eine horizontale und vertikale Bewegung des Fahrzeugsitzes zum Verstauen des Fahrzeugsitzes mittels des Viergelenk-Getriebes und der entriegelten Verriegelungsvorrichtung kontrollierbar geführt ist.

Anhand der beigefügten schematischen Figuren wird die Erfindung näher erläutert.

Dabei zeigen
- Figur 1: schematisch eine Seitenansicht eines Fahrzeugsitzes in einer verriegelten ersten Position,
- Figur 2: schematisch eine Seitenansicht des Fahrzeugsitzes gemäß Figur 1 in der verriegelten ersten Position und in einer entriegelten ersten Position,
- Figur 3: schematisch eine Seitenansicht des Fahrzeugsitzes gemäß Figur 1 in einer entriegelten zweiten Position und in der verriegelten ersten Position, und
- Figur 4: schematisch eine Seitenansicht eines Fahrzeugsitzes gemäß Figur 1 in einer verriegelten zweiten Position und in der verriegelten ersten Position.

Einander entsprechende Teile sind in allen Figuren mit den gleichen Bezugszeichen versehen.

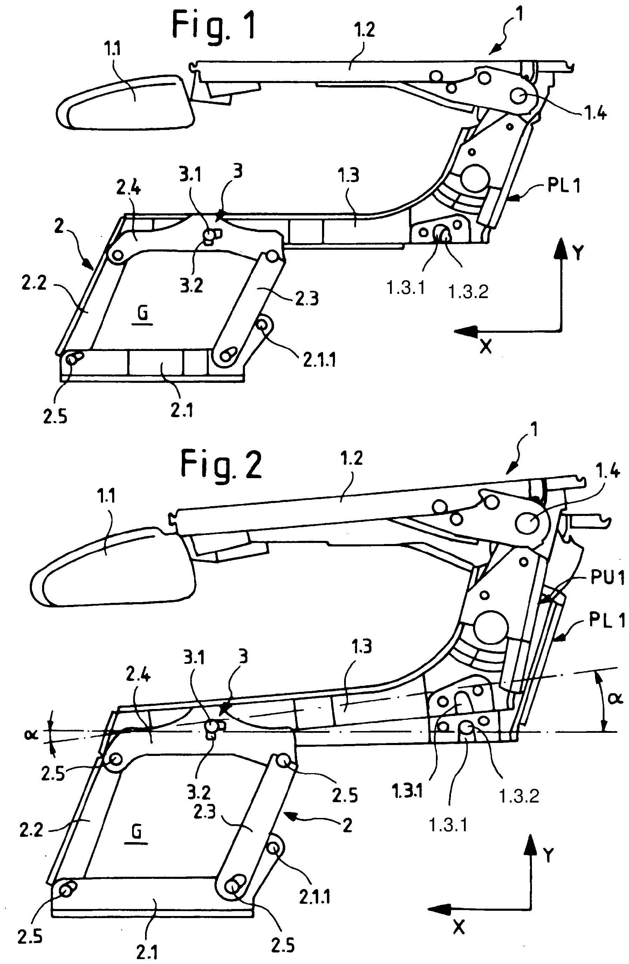

Die Figur 1 zeigt in einer Seitenansicht einen Fahrzeugsitz 1. Der Fahrzeugsitz 1 umfasst ein Kopfstützteil 1.1, ein Lehnenteil 1.2 und ein Sitzflächenteil 1.3.

Das Kopfstützteil 1.1 ist mit dem Lehnenteil 1.2 derart verschiebbar verbunden, dass eine Stützhöhe des Kopfstützteils 1.1 einstellbar und justierbar ist.

Das Lehnenteil 1.2 ist mit dem Sitzflächenteil 1.3 mittels eines Gelenks 1.4 verbunden, so dass das Lehnenteil 1.2 zwischen einer zusammengeklappten Position, in der das Lehnenteil 1.2 und das Sitzflächenteil 1.3 im Wesentlichen parallel zueinander und parallel zu einer horizontalen Richtung x angeordnet sind, und einer ausgeklappten Position, in der das Lehnenteil 1.2 im Wesentlichen senkrecht zum Sitzflächenteil 1.3 und parallel zu einer vertikalen Richtung y angeordnet ist, schwenkbar ist.

Der Fahrzeugsitz 1 ist im Fahrzeug fixiert. Dazu umfasst der Fahrzeugsitz ein erstes, ein zweites, ein drittes und ein viertes Befestigungselement 2.1, 2.2, 2.3, 2.4, die mittels Gelenkverbindungen 2.5 schwenkbar verbunden sind und in Form eines Parallelogramms zueinander angeordnet sind. Alternativ können sie zueinander trapezförmig angeordnet sein.

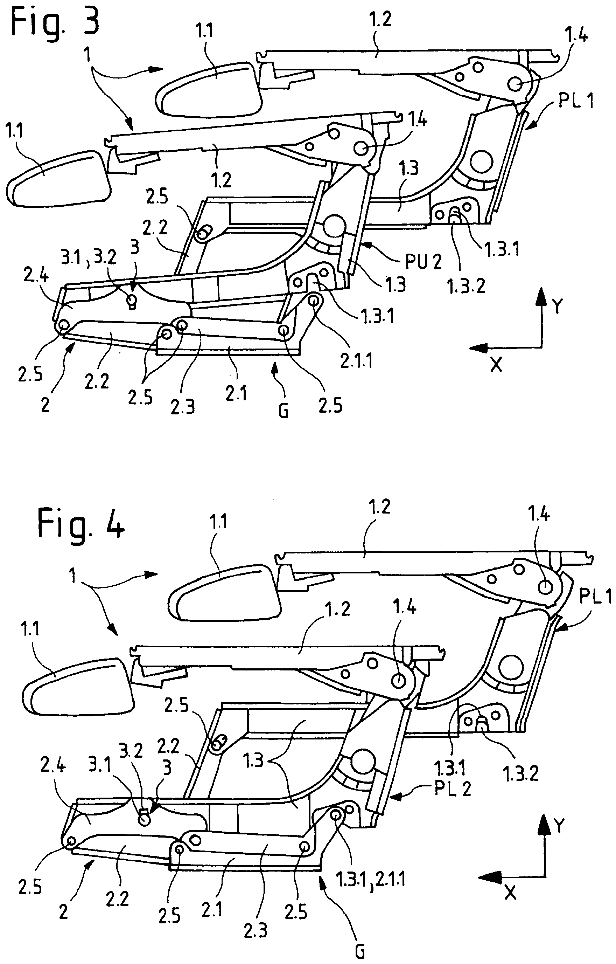

Die vier Befestigungselemente 2.1 bis 2.4 bilden dabei ein Mehrgelenk-Getriebe G, durch welches der Fahrzeugsitz 1 zumindest zwischen einer in Figur 1 dargestellten verriegelten ersten Position PL1, insbesondere einer erhöhten Position in einer Nichtgebrauchs- oder Gebrauchsstellung, und einer in Figur 4 dargestellten verriegelten zweiten Position PL2, insbesondere einer niedrigeren Position in einer Ruhestellung oder bodennahen verstauten Position (flache Bodenstellung), kontrolliert bewegbar oder führbar, insbesondere schwenk- und längsverschiebbar ist.

Das Mehrgelenk-Getriebe G ist ein Viergelenk-Getriebe.

Das erste Befestigungselement 2.1 verläuft parallel zur horizontalen Richtung x und ist mit einer Karosserie, insbesondere einem Boden, des Fahrzeugs fest verbunden und bildet den Abstand oder das untere Getriebeglied des Mehrgelenk-Getriebes G.

Das vierte Befestigungselement 2.4 ist sitzseitig an das als Betätigungselement ausgebildete Sitzflächenteil 1.3 befestigt. Das vierte Befestigungselement 2.4 dient als Koppel oder Antrieb des Mehrgelenk-Getriebes G.

Das zweite und dritte Befestigungselement 2.2, 2.3 dienen als Schwingen des Mehrgelenk-Getriebes G. Diese Schwingen sind endseitig einerseits an dem als Koppel oder Antrieb dienenden vierten Befestigungselement 2.4 und andererseits an dem als Boden dienenden ersten Befestigungselement 2.1 in vier Drehgelenkpunkten schwenkbar gelagert.

Das erste Befestigungselement 2.1 weist in Längsrichtung gesehen an einem hinteren abgewinkelten Ende ein als Bolzen oder Stift ausgebildetes Arretierungselment 2.1.1 auf, z. B. einen senkrecht abstehenden Bolzen oder Stift, auf, der zur Arretierung des Fahrzeugsitzes 1 beim Verstauen desselbigen in der bodennahen verstauten Endposition, der verriegelten zweiten Position PL2, in einem Fußraum des Fahrzeugs dient.

Dazu weist das parallel zum ersten Befestigungselement 2.1 verlaufende Sitzflächenteil 1.3 eine korrespondierende Arretierungsvorrichtung 1.3.1 mit einem senkrechten Schlitz oder einer senkrechten Ausnehmung auf, die zur Aufnahme des Arretierungselements 2.1.1 dient. Die Arretierungsvorrichtung 1.3.1 und das Arretierungselement 2.1.1 sind somit als eine Bolzen-Schlitz-Arretierung ausgeführt.

Das erste Befestigungselement 2.1 ist mittels jeweils einer der Gelenkverbindungen 2.5 mit dem zweiten Befestigungselement 2.2 und dem dritten Befestigungselement 2.3 verbunden. Entsprechend ist das vierte Befestigungselement 2.4 mit dem zweiten Befestigungselement 2.2 und dem dritten Befestigungselement 2.3 mittels jeweiliger Gelenkverbindungen 2.5 verbunden.

Das Sitzflächenteil 1.3 ist mit dem vierten Befestigungselement 2.4 schwenkbar verbunden, so dass der Fahrzeugsitz 1 um eine Achse, die normal zu der von der horizontalen Richtung x und der vertikalen Richtung y aufgespannten Ebene verläuft, über zumindest einen kleinen Grenzwinkel α schwenkbar oder klappbar ist. Das Schwenken des Fahrzeugsitzes 1 über den Grenzwinkel α kann insbesondere mittels eines Anhebens des Sitzflächenteils 1.3 erreicht werden.

Der Fahrzeugsitz 1 ist in Figur 1 in der verriegelten ersten Position PL1 gezeigt, in der die räumliche Anordnung des Fahrzeugsitzes 1 und der Befestigungsvorrichtung 2 mittels einer Verriegelungsvorrichtung 3 fixiert ist. In der verriegelten ersten Position PL1 ist das Sitzflächenteil 1.3 im Wesentlichen parallel zur horizontalen Richtung x ausgerichtet.

Die Verriegelungsvorrichtung 3 umfasst mindestens eine Pin-Slot-Führung zur geführten Ent- oder Verriegelung des Mehrgelenk-Getriebes G während der Ent- bzw. Verriegelungsbewegung und die Arretierungsvorrichtung 1.3.1 zur Verriegelung des Fahrzeugsitzes 1 in den jeweiligen verriegelten ersten und zweiten Position PL1 und PL2.

Die Verriegelungsvorrichtung 3 umfasst als Pin-Slot-Führung ein pin-, stift- oder bolzenförmiges Verriegelungselement 3.1, das mit dem Sitzflächenteil 1.3 verbunden ist oder an dem Sitzflächenteil 1.3 angeformt ist. Das bolzenförmige Verriegelungselement 3.1 ist derart in einer slot- oder schlitzförmigen Aussparung 3.2, die in dem vierten Befestigungselement 2.4 eingeformt ist, aufgenommen, dass der Fahrzeugsitz 1 in der verriegelten ersten Position PL1 fixiert und beim Ent- oder Verriegeln kontrolliert führbar ist.

Die Arretierungsvorrichtung 1.3.1 ist als ein senkrechter Schlitz oder eine senkrechte Ausnehmung ausgebildet, in welche in der verriegelten ersten Position PL1 ein Bolzen 1.3.2, der karosserieseitig oder bodenseitig form-, stoff- und/oder kraftschlüssig angeordnet ist, oder in der verriegelten zweiten Position PL2 das Arretierungselement 2.1.1 arretierend eingreifen, so dass der Fahrzeugsitz 1 fixiert und nicht bewegbar, insbesondere verschiebbar ist.

Figur 2 zeigt den Fahrzeugsitz 1 gemäß Figur 1 in einer entriegelten ersten Position PU1, in der eine Bewegung des Fahrzeugsitzes 1 entlang der horizontalen Richtung x und entgegen der vertikalen Richtung y ermöglicht ist.

Der Fahrzeugsitz 1 wurde zur Entriegelung der Verriegelungsvorrichtung 3 und des Mehrgelenk-Getriebes G um den Grenzwinkel α geklappt oder geschwenkt. Das Sitzflächenteil 1.3 ist gegenüber der horizontalen Richtung x leicht verkippt angeordnet.

Zum besseren Vergleich der räumlichen Orientierung des Fahrzeugsitzes 1 in der entriegelten ersten Position PU1 ist im Hintergrund von Figur 2 der Fahrzeugsitz 1 in der verriegelten ersten Position PL1 gemäß Figur 1 gezeigt.

Figur 3 zeigt den Fahrzeugsitz 1 in einer verstauten und entriegelten zweiten Position PU2 und, zum Vergleich dazu, den Fahrzeugsitz 1 in der verriegelten ersten Position PL1, die im Hintergrund dargestellt ist.

Das zweite und das dritte Befestigungselement 2.2, 2.3 sind im Wesentlichen parallel zur horizontalen Richtung x ausgerichtet. Der Fahrzeugsitz 1 ist von der entriegelten ersten Position PU1 derart in die entriegelte zweite Position PU2 bewegbar, dass zu jedem Zeitpunkt der Bewegung das zweite und dritte Befestigungselement 2.2, 2.3 sowie das erste und das vierte Befestigungselement 2.1, 2.4 des Mehrgelenk-Getriebes G parallel zueinander ausgerichtet sind.

Bei der Bewegung des Fahrzeugsitzes 1 von der entriegelten ersten Position PU1 in die entriegelte zweite Position PU2 bewegt sich der Fahrzeugsitz 1 sowohl in die horizontale Richtung x als auch antiparallel zur vertikalen Richtung y, wobei der Fahrzeugsitz 1 in einem Fußraum des Fahrzeugs verstaut wird.

Die Bewegung des Fahrzeugsitzes 1 ist sowohl mittels der Gelenkverbindungen 2.5 der zueinander schwenkbar gelagerten ersten, zweiten, dritten und vierten Befestigungselemente 2.1, 2.2, 2.3, 2.4 kontrolliert geführt. Zusätzlich ist diese Bewegung von dem in der Aussparung 3.2 geführten bolzenförmigen Verriegelungselement 3.1 kontrolliert geführt, so dass der Fahrzeugsitz 1 im Fußraum auf eine für einen Nutzer besonders einfache und bequeme Art und Weise verstaut werden kann.

Ausgehend von der entriegelten zweiten Position PU2 kann der Fahrzeugssitz 1 mit einer entsprechend entgegen gesetzten Bewegung wieder ausgeklappt und in die entriegelte erste Position PU1 gebracht werden.

Figur 4 zeigt den Fahrzeugsitz 1 in einer verriegelten zweiten Position PL2 und, im Vergleich dazu, den Fahrzeugsitz 1 im Hintergrund in der verriegelten ersten Position PL1.

Das Arretierungselement 2.1.1 ist in die Arretierungsvorrichtung 1.3.1 eingerastet, so dass der Fahrzeugsitz 1 in der verriegelten zweiten Position PL2 lösbar arretiert ist. Damit ist vermieden, dass sich der Fahrzeugsitz 1 aus der verriegelten zweiten Position PL2 versehentlich löst. Das Einrasten des Arretierungselements 2.1.1 in die Arretierungsvorrichtung 1.3.1 kann mittels einer Krafteinwirkung entgegen der vertikalen Richtung y bewirkt werden. Entsprechend kann der Fahrzeugsitz 1 von der verriegelten zweiten Position PL2 in die entriegelte zweite Position PU1 mittels eines kurzen Anhebens und Verkippen des Sitzflächenteils 1.3 bewegt werden.

### Bezugszeichenliste

- 1: Fahrzeugsitz
- 1.1: Kopfstützteil
- 1.2: Lehnenteil
- 1.3: Sitzflächenteil
- 1.3.1: Arretierungsvorrichtung
- 1.3.2: Bolzen
- 1.4: Gelenk
- 2: Befestigungsvorrichtung
- 2.1: erstes Befestigungselement
- 2.1.1: Arretierungselement
- 2.2: zweites Befestigungselement
- 2.3: drittes Befestigungselement
- 2.4: viertes Befestigungselement
- 2.5: Gelenkverbindung
- 3: Verriegelungsvorrichtung
- 3.1: Verriegelungselement
- 3.2: Aussparung
- G: Mehrgelenk-Getriebe
- PL1: verriegelte erste Position
- PU1: entriegelte erste Position
- PU2: entriegelte zweite Position
- PL2: verriegelte zweite Position
- x: horizontale Richtung
- y: vertikale Richtung
- α: Grenzwinkel

## Patentansprüche

1. Fahrzeugsitz (1), insbesondere Kraftfahrzeugsitz, mit einem zumindest teilweise klappbaren Sitzflächenteil (1.3) und einem an dem Sitzflächenteil (1.3) klappbaren Lehnenteil (1.2) sowie einem Mehrgelenk-Getriebe (G) und einer Verriegelungsvorrichtung (3), die bei einem Schwenken oder Klappen des Sitzflächenteiles (1.3) des entriegelten Fahrzeugsitzes (1) über einen definierten Grenzwinkel (a) hinaus das Mehrgelenk-Getriebe (G) entriegelt, durch das der Fahrzeugsitz (1) zwischen einer entriegelten ersten Position (PU1), in welcher das Mehrgelenk-Getriebe (G) ungefaltet ist, und einer entriegelten zweiten Position (PU2), in welcher das Mehr-Gelenk-Getriebe (G) gefaltet ist, oder umgekehrt kontrolliert führbar, insbesondere schwenk- und längsverschiebbar ist, wobei das Mehrgelenk-Getriebe (G) als ein Viergelenk-Getriebe ausgebildet ist, dessen erstes Befestigungselement (2.1) boden- oder karosserieseitig befestigbar und dessen viertes Befestigungselement (2.4) sitzseitig an dem als Betätigungselement ausgebildeten Sitzflächenteil (1.3) befestigt ist, wobei das erste und das vierte Befestigungselement (2.1, 2.4) die an diesen endseitig schwenkbar gelagerten und als Schwingen ausgebildeten zweiten und dritten Befestigungselemente (2.2, 2.3) miteinander koppeln, **dadurch gekennzeichnet, dass** das erste Befestigungselement (2.1) in Längsrichtung (x) gesehen ein hinteres abgewinkeltes Ende aufweist, an welchem ein Arretierungselement (2.1.1) angeordnet oder angeformt ist, und das Sitzflächenteil (1.3) eine Arretierungvorrichtung (1.3.1) aufweist, die als ein senkrechter Schlitz oder eine senkrechte Ausnehmung ausgebildet ist, in welche entweder in einer verriegelten ersten Position (PL1) des Viergelenk-Getriebes ein karosserieseitig oder Bodenseitig angeordneter Bolzen (1.3.2) oder in einer verriegelten zweiten Position (PL2) des Viergelenk-Getriebes das als Bolzen oder Stift ausgebildete Arretierungselement (2.1.1) arretierbar ist.

2. Fahrzeugsitz (1) nach Anspruch 1,
**dadurch gekennzeichnet, dass** die Verriegelungsvorrichtung (3) mindestens eine Pin-Slot-Führung zur Entriegelung des Viergelenk-Getriebes aufweist.

3. Fahrzeugsitz (1) nach Anspruch 2,
**dadurch gekennzeichnet, dass** der Fahrzeugsitz (1) zur Ver- oder Entriegelung zwischen der verriegelten ersten oder zweiten Position (PL1 oder PL2) und der entriegelten ersten oder zweiten Position (PU1 oder PU2) durch die Pin-Slot-Führung oder umgekehrt kontrolliert führbar, insbesondere schwenkbar ist.

4. Fahrzeugsitz (1) nach einem der vorhergehenden Ansprüche 2 oder 3, **dadurch kennzeichnet, dass** die Pin-Slot-Führung ein als Pin ausgebildetes Verriegelungselement (3.1) und eine als Slot ausgebildete Aussparung (3.2) umfasst, wobei der Pin am Sitzflächenteil (1.3) und der Slot am vierten Befestigungselement (2.4) oder umgekehrt angeordnet sind.

5. Fahrzeugsitz (1) nach einem der vorhergehenden Ansprüche, **dadurch gekennzeichnet, dass** das Viergelenk-Getriebe in Längsrichtung gesehen mittels des vierten Befestigungselementes (2.4) am vorderen Ende des Fahrzeugsitzes (1) an dessen Sitzflächenteil (1.3) angeordnet ist.

## Claims

1. Vehicle seat (1), in particular motor vehicle seat, having an at least partially foldable seating surface part (1.3) and a backrest part (1.2) that is foldable on the seating surface part (1.3), and also a multi-link mechanism (G) and a locking device (3) which, when the seating surface part (1.3) of the unlocked vehicle seat (1) is pivoted or folded beyond a defined limit angle (α), unlocks the multi-link mechanism (G) by which the vehicle seat (1) is guidable, in particular pivotable and longitudinally displaceable, in a controlled manner between an unlocked first position (PU1) in which the multi-link mechanism (G) is unfolded and an unlocked second position (PU2) in which the multi-link mechanism (G) is folded, or vice versa, wherein the multi-link mechanism (G) is in the form of a four-link mechanism, the first fastening element (2.1) of which is fastenable on the floor or bodywork side and the fourth fastening element (2.4) of which is fastened on the seat side to the seating surface part (1.3) which is configured as an actuating element, wherein the first and the fourth fastening element (2.1, 2.4) couple together the second and third fastening elements (2.2, 2.3) that are mounted in a pivotable manner on the end side and are in the form of swing arms, **characterized in that** the first fastening element (2.1), as seen in the longitudinal direction (x), has a rear angled end on which a blocking element (2.1.1) is arranged or integrally formed, and the seating surface part (1.3) has a blocking device (1.3.1) which is in the form of a vertical slot or a vertical recess in which either, in a locked first position (PL1) of the four-link mechanism, a pin (1.3.2) arranged on the bodywork side or the floor side or, in a locked second position (PL2) of the four-link mechanism, the blocking element (2.1.1) in the form of a pin or peg is blockable.

2. Vehicle seat (1) according to Claim 1, **characterized in that** the locking device (3) has at least one pin-slot guide for unlocking the four-link mechanism.

3. Vehicle seat (1) according to Claim 2, **characterized in that**, for locking or unlocking, the vehicle seat (1) is guidable, in particular pivotable, in a controlled manner between the locked first or second position (PL1 or PL2) and the unlocked first or second position (PU1 or PU2) by the pin-slot guide or vice versa.

4. Vehicle seat (1) according to either of the preceding Claims 2 and 3, **characterized in that** the pin-slot guide comprises a locking element (3.1) in the form of a pin and a cutout (3.2) in the form of a slot, wherein the pin is arranged on the seating surface part (1.3) and the slot is arranged in the fourth fastening element (2.4) or vice versa.

5. Vehicle seat (1) according to one of the preceding claims, **characterized in that** the four-link mechanism, as seen in the longitudinal direction, is arranged on the seating surface part (1.3) of the vehicle seat (1) at the front end of the latter by means of the fourth fastening element (2.4).

## Revendications

1. Siège de véhicule (1), en particulier siège de véhicule automobile, comprenant une partie d'assise (1.3) au moins partiellement rabattable et une partie de dossier (1.2) rabattable sur la partie d'assise (1.3), ainsi qu'un mécanisme à plusieurs articulations (G) et un dispositif de verrouillage (3) qui, lors d'un pivotement ou rabattement de la partie d'assise (1.3) du siège de véhicule déverrouillé (1) au-delà d'un angle limite défini (a) déverrouille le mécanisme à plusieurs articulations (G) par lequel le siège de véhicule (1) peut être guidé de manière contrôlée, en particulier déplacé par pivotement ou coulissement longitudinal, entre une première position déverrouillée (PU1), dans laquelle le mécanisme à plusieurs articulations (G) est déplié, et une deuxième position déverrouillée (PU2), dans laquelle le mécanisme à plusieurs articulations (G) est plié, ou inversement, le mécanisme à plusieurs articulations (G) étant réalisé sous la forme d'un mécanisme à quatre articulations dont le premier élément de fixation (2.1) peut être fixé côté plancher ou côté carrosserie, et dont le quatrième élément de fixation (2.4) est fixé côté siège à la partie d'assise (1.3) réalisé sous forme d'élément d'actionnement, le premier et le quatrième élément de fixation (2.1, 2.4) couplant l'un à l'autre les deuxième et troisième éléments de fixation (2.2, 2.3) montés pivotants côté extrémité au niveau de ceux-ci et réalisés sous forme de coulisses, **caractérisé en ce que** le premier élément de fixation (2.1), vu dans la direction longitudinale (x), présente une extrémité coudée arrière à laquelle un élément de blocage (2.1.1) est disposé ou rapporté, et la partie d'assise (1.3) présente un dispositif de blocage (1.3.1) qui est réalisé sous la forme d'une encoche verticale ou d'un creux vertical dans laquelle/lequel soit un boulon (1.3.2) disposé côté carrosserie ou côté plancher peut être bloqué dans une première position verrouillée (PL1) du mécanisme à quatre articulations, soit un élément de blocage (2.1.1) réalisé sous forme de boulon ou de cheville peut être bloqué dans une deuxième position verrouillée (PL2) du mécanisme à quatre articulations.

2. Siège de véhicule (1) selon la revendication 1, **caractérisé en ce que** le dispositif de verrouillage (3) présente au moins un guidage à languette et rainure pour déverrouiller le mécanisme à quatre articulations.

3. Siège de véhicule (1) selon la revendication 2, **caractérisé en ce que** pour le verrouillage ou le déverrouillage, le siège de véhicule (1) peut être guidé de manière contrôlée, en particulier par pivotement, entre la première ou deuxième position verrouillée (PL1 ou PL2) et la première ou deuxième position déverrouillée (PU1 ou PU2) par le guidage à languette et rainure, ou inversement.

4. Siège de véhicule (1) selon l'une quelconque des revendications précédentes 2 ou 3, **caractérisé en ce que** le guidage à languette et rainure comprend un élément de verrouillage (3.1) réalisé sous forme de languette et un évidement (3.2) réalisé sous forme de rainure, dans lequel la languette est disposée au niveau de la partie d'assise (1.3) et la rainure est disposée au niveau du quatrième élément de fixation (2.4) ou inversement.

5. Siège de véhicule (1) selon l'une quelconque des revendications précédentes, **caractérisé en ce que** le mécanisme à quatre articulations, vu dans la direction longitudinale, est disposé au moyen du quatrième élément de fixation (2.4) à l'extrémité avant du siège de véhicule (1) au niveau de la partie d'assise (1.3) de celui-ci.
